# EUROPEAN PATENT APPLICATION

(11) **EP 0 942 383 A1**
(43) Date of publication of application: **15.09.1999**
(21) Application number: 99200748.4
(22) Date of filing: 11.03.1999
(51) Int. Cl.: G06F 17/60

(54) **Device for displaying the expiration date of products in a deep-freezer**

(30) Priority: 11.03.1998 BE 9800195
(71) Applicant: Huybrechts, Gustaaf, 2360 Oud-Turnhout (BE)
(72) Inventor: Huybrechts, Gustaaf, 2360 Oud-Turnhout (BE)
(74) Representative: Quintelier, Claude

(57) **Abstract**

The invention relates to a device for displaying expiration dates for products to be stored in a deep-freezer comprising a user user interface for a user interface for inputting an identification parameter for the stored products, and a display unit connected to said user interface through the intermediary of a control unit and provided for displaying a corresponding expiration date for a product to be stored. According to the invention said control unit is provided for generating and displaying a menu product names on said display unit, and said user interface comprises a selection means, which selection means is connected with said control unit and can be operated by a user for selecting said identification parameters from said menu of product names.

## Description

The present invention relates to a device for displaying expiration dates for products to be stored in a deep-freezer comprising : a user interface for inputting an identification parameter for the stored products, and a display unit connected to said user interface through the intermediary of a control unit and provided for displaying for each input product a corresponding expiration date.

Such a device is known form EP-A-0 189 207. The identification parameter to be inserted identifies the product that is stored in the deep-freezer. On the basis of this parameter and on the basis of the time required to bring the deep-freezer to a predetermined temperature, the expiration date of the product is determined and consecutively displayed on the display unit.

The drawback of the known device is that the user interface comprises a corresponding push button for each different product which is stored in the deep-freezer. This signifies thus that the number of different products from which the expiration date can be determined and displayed by the device is relatively limited, i.e. limited to the number of push buttons.

The object of the invention is to provide a device allowing to display the expiration date of a large number of products, in particular, independent of the number of push buttons, and which is user friendly and cheap.

To this purpose, the device according to the invention is characterized in that said control unit is provided for generating and displaying a menu product names on said display unit, and that said user interface comprises a selection means, which selection means is connected with said control unit and can be operated by a user for selecting said identification parameters from said menu of product names.

Since the identification parameter is now input by selecting a product name from a menu, the number of products from which the expiration day needs to be displayed is not anymore dependent on the number of push buttons from the user interface, but form the number of product names in the menu. In this way, the keys in the user interface can be limited, with regard to selecting product names, to one or two keys for moving the cursor from one product name to the other within the menu and one push button for selecting a product name in the menu.

A preferred embodiment of the device according to the invention will now be described in detail referring to the figures.
Figure 1 is a front view of the device according to the invention.
Figure 2 is a front view of the device according to figure 1 wherein
an example of a product to be stored is displayed.

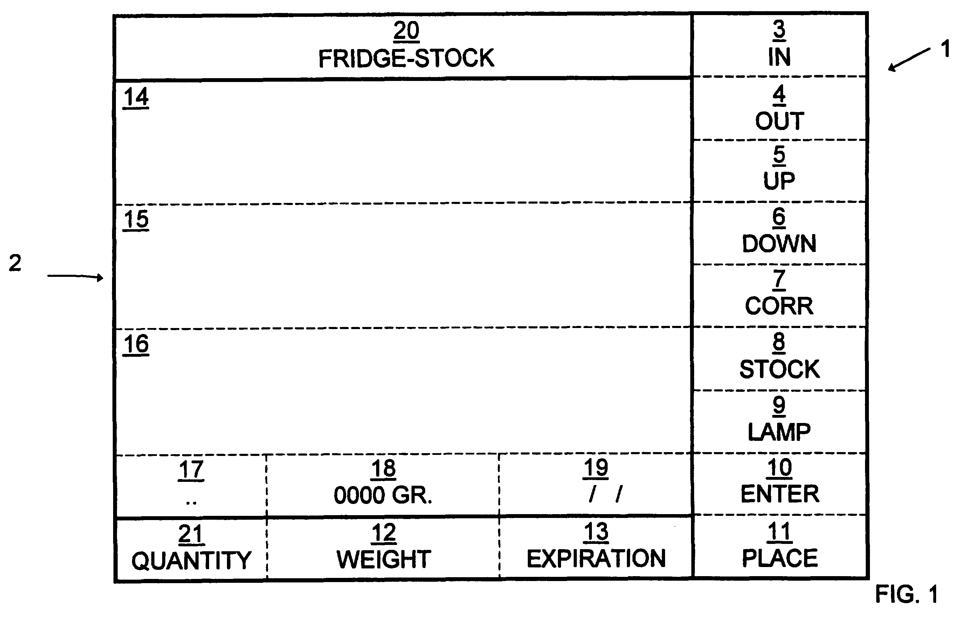

As shown in figure 1, the device according to the invention comprises a user interface 1 comprising a number of keys 3-11, the corresponding functions of which are described further.

The device further comprises a display unit 2, preferably subdivided in different parts 14-19, for displaying a main menu in part 14, a number of submenus in parts 15 and 16, the quantity in screen part 17, the weight of the product to be stored in part 18 and the expiration date of the stored products in 19.

The display unit 2 and the user interface 1 are connected to each other by means of a control unit with memory (not shown).

The device preferably further comprises a magnet at the back side, allowing to fix the device to a deep-freezer or the door of the deep-freezer in a simple way. The device is further provided to be fed by mains current or batteries, for example, two cadmium batteries. A combination of both is also possible, so that the batteries can serve as auxiliary current source in case of break down of the mains current.

The device further comprises a clock to determine the current time and date which can be set by setting means. Preferably, the device further comprises language setting means allowing to choose the language of the product names appearing on the display unit. The language setting means comprise for example a switch which can be switched in different position, each position corresponding to a determined language. According to another embodiment, a menu appears on the display unit displaying a number of languages. The user choose then in the menu the desired language. This menu appears in particular upon using the device for the first time and/or by pushing on a language setting key (not shown).

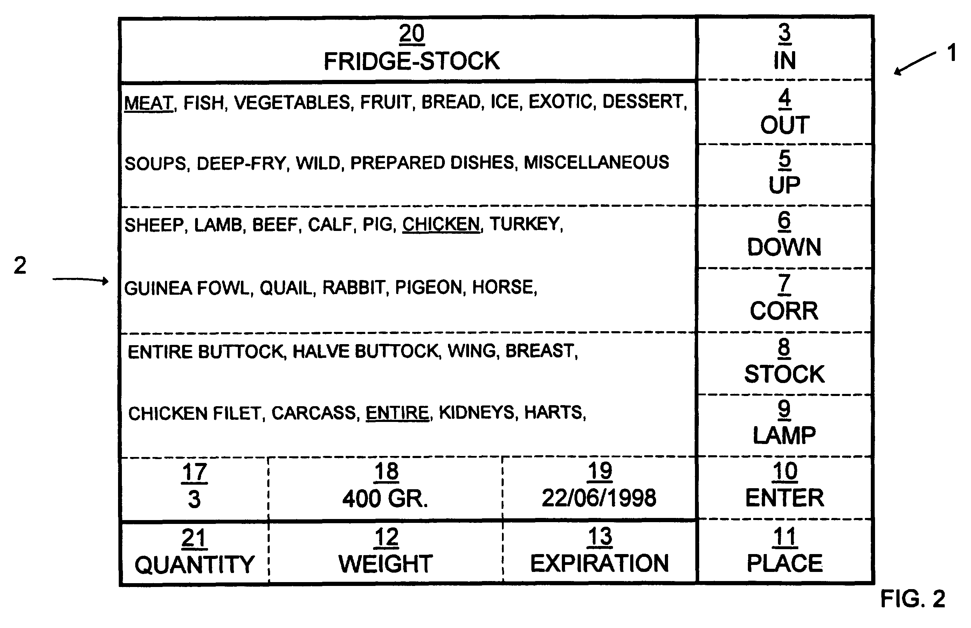

The display unit 2 is thus provided for displaying menus of product names. Figure 2 illustrates an example thereof. As already indicated, the menu is preferably subdivided in a main menu and a number of submenus, for example two submenus. This enables to structure the product names according to a main class and subclasses. If the subdivision of the product names comprises more levels than the number of menus and submenus, then the menus shift during selection of the product names to a higher screen part. If for example four levels are determined and a product name is selected at the third level, then the content of screen part 15 shifts to screen part 14, the content of screen part 16 to screen part 15 and the fourth level product names appears on screen part 16.

The user interface 1 comprises a number of push buttons 3-11, having as function :
- 3.IN:: This key is used for indicating that a product is stored in the deep-freezer. This key starts the procedure for inputting the identification parameter. By pressing this key, the main menu of the product names appears on screen part 14. An example thereof is described further, referring to figure 2.
- 4.OUT:: When a product is removed from the deep-freezer to be consumed, then this must be notified to the device so that the data relating to this product is erased from the memory.
- 5.UP and 6.DOWN:: These keys serve for moving the cursor from product name to product name in a main menu or submenu. They also have as additional function to input or modify the weight of the product to be stored and the expiration date.
- 7. CORR:: This key enables to modify the inserted parameters. When the cursor is for example in screen part 15 and it is established that the inserted product in screen part 14 was incorrect, then CORR key is pressed to return to the previous screen part. This function key essentially corresponds to an "Escape" key on a PC.
- 8. STOCK:: This function key is provided for showing which products are present in the deep-freezer. The advantage thereof is that the content of the deep-freezer can be verified without having to open the deep-freezer, saving in this way energy.
- 9. LAMP:: This key serves as indicator for pointing out when a product, which is present in the deep-freezer, approaches its expiration day. If such is the case, key 9 will for example start flashing. This is implemented in practice by verifying if the current time, to be read form the clock, has passed a predetermined time criterion before the expiration date of at least one of the products. The predetermined time criterion is for example one week, but can also be dependent on the product. This predetermined time criterion is established by the control unit.
- 10. ENTER:: This key serves to input a selection or to confirm or to finish an action, and is to be compared with an "ENTER" key for a PC.
- 11. PLACE:: This key enables to indicate in which compartment of the deep-freezer the product is stored. Even in a deep-freezer without compartments, a subdivision can be made, for example, left, right, up, middle, down and combinations thereof. When this key is pressed, a number of possibilities appear on the display unit 2, for example: "1", "2", "3", "4", "5", ..., "down left", "up left", "down right", "up right", ...

The operation of the device according to the invention is now described by means of a number of examples.

If, for example, three entire chickens are stored in the deep-freezer, the IN key is pressed in a first step. With this key, the device is activated. Then, the cursor is moved by means of the UP and DOWN keys in screen part 14 to the word "meat". This is schematically shown in figure 2 by underlining the word "meat". In practice, this word will flash or change color. For selecting "meat", the ENTER key is pressed. In this way, a first submenu appears then in screen part 15, wherein a subdivision of meat types are shown. In the same way as for selecting "meat", "chicken" will now be selected. The ENTER key is then again pressed so that the second submenu is shown in screen part 16, wherein a subdivision of possible pieces of chicken are displayed. The cursor is moved there to "entire" and the ENTER key is again pressed. Further, the quantity is inserted by means of UP and DOWN keys until the quantity "3" is shown in screen part 17. ENTER is hit and if desired, the weight of the first chicken is additionally inserted by means of the UP and DOWN keys (the weight is indicated in screen part 18), and ENTER is pressed. Further, the weight of the second chicken and the third chicken are inserted. The control unit will now, on the basis of the inserted identification parameter, i.e. the name of the product, preferably suggest an expiration date in its own, which is shown in screen part 19. For this purpose, an algorithm is stored in the memory of the control unit for determining an expiration date at least for a part or preferably for all possible products to be stored. For example: for chicken the expiration date is 3 months from the date when the product was inserted. For minced meat, it is for example 1 month. The expiration date determined by the control unit can now be modified manually by means of the UP, DOWN and ENTER keys. If the expiration date shown in screen part 18 is agreed with, ENTER is hit for inserting this expiration date. A menu is then shown on screen part 16 with possible indications of places where the chicken will be stored in the deep-freezer. An indication of the place is chosen in the same way as the selection of "meat" (see above) and by pressing ENTER. Now, all data relating to the products stored in the deep-freezer is inserted. This data is stored in the memory of the device.

When a product is removed from the deep-freezer, the data relating to this product must be erased from the memory. This is performed as follows. Suppose that two chickens are removed from the deep-freezer, then the OUT key is pressed in a first step. In this way, the main menu appears again in screen part 14. "Meat" is selected in screen part 14, followed by "chicken" in screen part 15, followed by "entire" in screen part 16 as explained herein above in detail. Then, the quantity is selected which is equal to the number of chickens removed from the deep-freezer, i.e. "2", and further, the correct weights are selected as described hereinabove. ENTER is then pressed so that the data relating to the two chickens are erased from the memory. The consequence of this operation is that the data relating to the content of the deep-freezer are refreshed and updated. In this way also, only the expiration date of the products which are actually stored in the deep-freezer, and not anymore the products which were already removed from the deep-freezer, are monitored.

According to an alternative, the device is provided for displaying all the inserted product on the display unit. When OUT is pressed, then all the inserted products are shown on the display unit and the product or products which are removed from the deep-freezer are selected to erase them form the memory. A combination of both is also conceivable, wherein the procedure of the previous paragraph is followed by pressing one time on the OUT key. When the OUT key is pressed twice, then all the inserted products are shown on the display unit 2, as indicated in this paragraph.

If the content of the deep-freezer is to be verified, then the function key "STOCK" 8 is used. Suppose that one wishes to know how many entire chickens are present in the deep-freezer. STOCK is then pressed, "meat" is selected in screen part 14, and then "chicken" in screen part 15 and then "entire" in screen part 16. On the display unit, the number of chickens is shown and the corresponding expiration dates.

If the entire content of the deep-freezer is to be verified, then the function key STOCK is pressed twice. In this way, the control unit reads the inserted identification parameters from its memory and displays them on the display unit, preferably sorted according to the expiration dates.

If the place of certain products, respectively, all products is to be verified, then the function key PLACE is pressed once, respectively twice.

If the expiration date of one of the products approaches, an indicator, for example LAMP 9 will show this. With indicator, a device to produce the sound signal is also to be understood. A combination of a visual and auditive indicator is also conceivable. To be able to establish if one of the products approaches its expiration date, the device according to the invention comprises a clock for setting the current time. The control unit compares the set current time (date) with the expiration date of the product. If the difference between both dates is smaller than a predetermined time criterion, for example two weeks, then the control unit sends a signal to LAMP 9 in order to light the latter. LAMP 9 is also a function key, so that by pressing the function key 9 (twice), all the products which are almost expired appear on the display unit. If the function key LAMP is pressed once, then a number of products can be selected, for example "chicken" and then all chickens which are almost expired appear on the display unit.

The selection means for selecting predetermined products from the menu and the submenus comprises thus the keys UP 5, DOWN 6 and ENTER 10. According to an alternative embodiment, the selection means is entirely or partially integrated in the display unit. The display unit is then in this case a touch screen, wherein the selection is performed by touching the screen near the parameter to be selected.

The device further comprises areas 12, 13, 20 and 21 to apply labels, to clarify the meaning of the function keys (12,13,21) or for example for displaying the trade name of the device (20).

The device can further be expanded with a number of accessories. An example of an accessory is a printer which can be connected to the device and provided for printing adhesive labels. These labels, which are applied on the products, preferably comprise the following information: name of the product, weight, date at which the product has been inserted, expiration date, place in the deep-freezer. In particular, the label further comprises a bar-code.

| | | |
|---|---|---|
| EXAMPLE: | ENTIRE CHICKEN | |
| | 1,450 KG | |
| | IN: | 11/03/98 |
| | EXPIRATION: | 11/11/98 |
| | DRAWER 3 | |

Another accessory which can be connected to the device according to the invention is a pen or eye provided for reading bar-codes. Reading the bar-code replaces for example the selection of the products in the menu, as described hereinabove, when a product is removed from the deep-freezer. This simplifies the steps which are to be performed when a product is removed from the deep-freezer, but could also be used when products are stored in the deep-freezer. In this case, the memory of the device comprises means for "recognising" the product on the basis of the bar-code.

A further accessory which can be connected of the device according to the invention is a balance. In particular the balance comprises in addition to a display unit for displaying the weight of the product, a further display unit for displaying the energy of the product (in kcal or kJoule). The energy is determined on the basis of the weight of the product which is inserted in the device according to the invention.

## Claims

1. Device for displaying expiration dates for products to be stored in a deep-freezer comprising :
a user interface for inputting an identification parameter for the stored products, and
a display unit connected to said user interface through the intermediary of a control unit and provided for displaying a corresponding expiration date for a product to be stored,
characterized in that
said control unit is provided for generating and displaying a menu product names on said display unit, and
that said user interface comprises a selection means, which selection means is connected with said control unit and can be operated by a user for selecting said identification parameters from said menu of product names.

2. Device according to claim 1, wherein said control unit is provided for establishing on the basis of said identification parameter for said stored product said corresponding expiration date.

3. Device according to claim 1, wherein said user interface is provided for inserting said corresponding expiration date.

4. Device according to claim 2, wherein said user interface is provided for modifying the expiration date established by the control unit.

5. Device according to any one of the preceding claims, wherein said menu comprises a main menu and at least one submenu.

6. Device according to any one of the preceding claims, further comprising a magnet provided at the back of the device.

7. Device according to any one of the preceding claims, further comprising language setting means, provided for setting a language for said menu of product names.

8. Device according to any one of the preceding claims, wherein said user interface comprises a function key for establishing which products are stored in the deep-freezer.

9. Device according to any one of the preceding claims, wherein said user interface comprises a place function key indicating the place of a product stored in said deep-freezer.

10. Device according to any one of the preceding claims, which device further comprises a clock for setting the current time, and wherein said use interface comprises an indicator for indicating when said current time has passed a predeterminate time criterion before the expiration date of at least one of the products.
